# EUROPEAN PATENT APPLICATION

(11) **EP 4 807 572 A1**
(43) Date of publication of application: **16.09.2026**
(21) Application number: 24895422.4
(22) Date of filing: 13.05.2024
(51) Int. Cl.: G06F 13/42

(54) **COMMUNICATION METHOD AND COMMUNICATION APPARATUS**

(30) Priority: 27.11.2023 CN 202311603388
(71) Applicant: Huawei Technologies Co., Ltd., Shenzhen, Guangdong 518129 (CN)
(72) Inventor: LIU, Rongguo, Shenzhen, Guangdong 518129 (CN); CHENG, Chuanning, Shenzhen, Guangdong 518129 (CN); KUANG, Xiaobo, Shenzhen, Guangdong 518129 (CN)
(74) Representative: Gill Jennings & Every LLP
(86) International application number: PCT/CN2024/092843
(87) International publication number: WO 2025/112311

(57) **Abstract**

A communication method and a communication apparatus are provided. The communication method is applied to a first host. There are a plurality of transmission paths used to transmit a packet between the first host and a second host. The method includes: The first host obtains information about a first resource space in the second host, where the information about the first resource space includes a start address of the first resource space, length information of the first resource space, and order attribute information corresponding to the first resource space. The first host stores the order attribute information corresponding to the first resource space and first path information, where the first path information indicates a transmission path corresponding to a first access packet for accessing the first resource space. In this way, when the first host sends the access packet to the second host to access the first resource space, the first host can learn of an ordering requirement of the access packet based on stored information. This implements packet ordering transmission in multi-path transmission scenarios.

## Description

This application claims priority to Chinese Patent Application No. 202311603388.X, filed with the China National Intellectual Property Administration on November 27, 2023 and entitled "COMMUNICATION METHOD AND COMMUNICATION APPARATUS", which is incorporated herein by reference in its entirety.

### TECHNICAL FIELD

This application relates to the field of computer technologies, and in particular, to a communication method and a communication apparatus.

### BACKGROUND

Peripheral component interconnect express (peripheral component interconnect express, PCIe) is a highspeed serial computer expansion bus standard, and is used to connect a processor and external devices. These peripheral devices are referred to as PCIe devices or briefly referred to as devices (Device).

In a current PCIe architecture, communication between any two devices can only occur over a single path between two interfaces. If two communicating devices need to maintain packet ordering during transmission, a point-to-point ordering (order) mechanism may be used to ensure the order of packets on a transmission path, thereby achieving end-to-end ordering.

However, the current PCIe architecture supports only a single-path packet ordering. Therefore, how to design a solution that can provide packet ordering in multi-path transmission scenarios becomes an urgent problem to be resolved.

### SUMMARY

This application provides a communication method, to implement packet ordering in multi-path transmission scenarios.

According to a first aspect, a communication method is provided, and is applied to a first host. The method may be performed by the first host, or may be performed by a circuit or a chip configured in the first host. This is not limited in this application. For ease of description, the following uses an example in which the first host performs the method for description.

The communication method includes: The first host obtains information about a first resource space in a second host, where the information about the first resource space includes a start address of the first resource space, length information of the first resource space, and order attribute information corresponding to the first resource space; and the order attribute information corresponding to the first resource space indicates an ordering requirement corresponding to a first access packet for accessing the first resource space; and the first host stores the order attribute information corresponding to the first resource space and first path information, where the first path information indicates a transmission path corresponding to the first access packet for accessing the first resource space, and the transmission path indicated by the first path information is one of a plurality of transmission paths included between the first host and the second host.

Based on the foregoing technical solution, the first host serves as a source device, and the second host serves as a target device. In a universal bus system, when a packet is transmitted between a source device and a target device, the packet may be transmitted over a plurality of transmission paths. Specifically, in this technical solution, the first resource space (for example, a memory segment (memory segment) and/or a functional entity (functional entity)) on the second host may be provided for the first host in a registration manner for use. When the first host obtains first resource space-related information of the second host, in addition to obtaining size and address information of the first resource space (for example, the start address of the first resource space and the length information of the first resource space), the first host further obtains the order attribute information corresponding to the first resource space, and stores information corresponding to the first resource space (for example, stores the order attribute information and the first path information that correspond to the first resource space), so that the first host can learn of, based on the stored information, the ordering requirement of the access packet for accessing the first resource space and the transmission path of the access packet when needing to send the access packet to the second host to access the first resource space. That is, access packets with a same ordering requirement may be transmitted over a transmission path, and access packets with different ordering requirements are transmitted over different paths. This implements packet ordering transmission in multi-path transmission scenarios.

With reference to the first aspect, in some implementations of the first aspect, that the first host stores the order attribute information and the first path information that correspond to the first resource space includes: The first host configures the information about the first resource space in a decoder table entry, where the decoder table entry includes a first entry, and the first entry includes the first path information and the order attribute information corresponding to the first resource space.

Based on the foregoing technical solution, the first host may configure the information about the first resource space in the decoder table entry, and record the information about the first resource space based on the first entry in the decoder table entry. This simplifies a manner in which the first host stores the information about the first resource space.

With reference to the first aspect, in some implementations of the first aspect, when the first host determines to send the first access packet to the second host to access the first resource space, the method includes: The first host queries the decoder table entry to determine the first path information and the ordering requirement corresponding to the first access packet; and the first host determines, based on the first path information, an output port corresponding to the first access packet and a first transmission path, where the first transmission path is a transmission path that is in the plurality of transmission paths and that is used to transmit the first access packet, and the first transmission path is used to transmit access packets corresponding to same path information.

Based on the foregoing technical solution, when the first host determines to send the first access packet to the second host to access the first resource space, the first host may obtain, by querying the decoder table entry, the order attribute information corresponding to the first resource space, to ensure that the first access packet is transmitted on the premise that the ordering requirement of the first access packet is met.

With reference to the first aspect, in some implementations of the first aspect, the method further includes: The first host generates the first access packet based on the first transmission path and the ordering requirement corresponding to the first access packet, where an order field of the first access packet carries information indicating the ordering requirement corresponding to the first access packet, and a load balancing factor field of the first access packet carries information indicating the first transmission path.

Based on the foregoing technical solution, when generating the first access packet, the first host fills a related domain end of the packet based on the first path information and the order attribute information corresponding to the first resource space that are obtained by querying the decoder table entry, so that the generated first access packet carries information indicating an order attribute and information about the transmission path.

With reference to the first aspect, in some implementations of the first aspect, a route indication field of the first access packet is set to 0; and the route indication field being set to 0 indicates to determine the transmission path of the first access packet according to a hash routing mechanism.

With reference to the first aspect, in some implementations of the first aspect, that the first host obtains the order attribute information corresponding to the first resource space includes: The first host receives the order attribute information corresponding to the first resource space from the second host; or the first host determines, based on usage of the first resource space, the order attribute information corresponding to the resource space.

Based on the foregoing technical solution, a manner in which the first host obtains the order attribute information corresponding to the first resource space may be: receiving the order attribute information from the second host. For example, in a process in which the second host provides the first resource space for the first host in the registration manner for use, different ordering requirements may be set based on functions of different resource spaces, and corresponding order attribute information is provided to the first host. Alternatively, the first host may determine different ordering requirements based on usage of different resource spaces. This improves flexibility of the solution.

With reference to the first aspect, in some implementations of the first aspect, the method further includes: The first host obtains information about a second resource space in the second host, where the information about the second resource space includes a start address of the second resource space, length information of the second resource space, and order attribute information corresponding to the second resource space; and the order attribute information corresponding to the second resource space indicates an ordering requirement corresponding to a second access packet for accessing the second resource space; and the first host stores second path information and the order attribute information corresponding to the second resource space, where the second path information indicates a transmission path corresponding to the second access packet for accessing the second resource space, the second path information is different from the first path information, and the order attribute information corresponding to the second resource space is different from the order attribute information corresponding to the first resource space.

Based on the foregoing technical solution, the first host may obtain information about different resource spaces on the second host. In addition, access packets corresponding to resource spaces with different ordering requirements may be transmitted over different paths, so that packet ordering transmission is implemented while multi-path transmission is ensured.

With reference to the first aspect, in some implementations of the first aspect, that the first host stores the order attribute information corresponding to the second resource space and the second path information includes: The first host configures the information about the second resource space in the decoder table entry, where the decoder table entry includes a second entry, and the second entry includes the second path information and the order attribute information corresponding to the second resource space.

With reference to the first aspect, in some implementations of the first aspect, the ordering requirement corresponding to the first access packet includes any one of the following: strong ordering (strong ordering, SO), no ordering (no ordering, NO), or relaxed ordering (relaxed ordering, RO). Strong ordering represents that the first access packet is an order packet, needs to be transmitted in an ordering manner, and is transmitted based on a transmission result of another packet. For example, there is an ordering requirement between the first access packet and a previous packet whose identifier is RO. No ordering represents that the first access packet does not have an ordering requirement, and does not need to be transmitted based on a transmission result of another packet. Relaxed ordering represents that there is an ordering requirement between the first access packet and a subsequent packet whose identifier is SO. For example, the packet whose identifier is SO cannot be transmitted earlier than the packet whose identifier is RO.

According to a second aspect, a communication method is provided, and applied to a second host. The method may be performed by the second host, or may be performed by a circuit or a chip configured in the second host. This is not limited in this application. For ease of description, the following uses an example in which the second host performs the method for description.

The communication method includes: The second host receives a first access packet from a first host, where the first access packet is used to access a first resource space in the second host, an order field of the first access packet carries information indicating an ordering requirement corresponding to the first access packet, and a load balancing factor field of the access packet carries information indicating a first transmission path; and the second host determines the ordering requirement of the first access packet based on the order field of the first access packet, where the second host receives at least one access packet transmitted over the first transmission path via a same physical port, and the first access packet is one of the at least one access packet.

For technical effect of the method shown in the second aspect and the possible designs of the second aspect, refer to the technical effect in the first aspect and the possible designs of the first aspect.

According to a third aspect, a communication apparatus is provided. The apparatus includes: a storage module, configured to store a program; and a processing module, configured to execute the program stored in the storage module. When the program stored in the storage module is executed, the processing module is configured to perform the methods provided in the foregoing aspects.

According to a fourth aspect, a computer-readable storage medium is provided. The computer-readable medium stores program code executed by a device, and the program code includes instructions used to perform the methods provided in the foregoing aspects.

According to a fifth aspect, a computer program product including instructions is provided. When the computer program product runs on a computer, the computer is caused to perform the methods provided in the foregoing aspects.

According to a sixth aspect, a chip is provided. The chip includes a processing module and a communication interface. The processing module reads, through the communication interface, instructions stored in a memory, to perform the methods provided in the foregoing aspects.

Optionally, in an implementation, the chip may further include a storage module. The storage module stores instructions. The processing module is configured to execute the instructions stored in the storage module. When the instructions are executed, the processing module is configured to perform the methods provided in the foregoing aspects.

According to a seventh aspect, a chip is provided. The chip includes a first host configured to perform the method provided in the first aspect and a second host configured to perform the method provided in the second aspect.

According to an eighth aspect, a computer system is provided. The computer system includes the chip shown in the seventh aspect.

According to a ninth aspect, a terminal device is provided. The terminal device includes the chip shown in the seventh aspect. For example, the terminal device includes but is not limited to a terminal like a mobile phone or a vehicle.

According to a tenth aspect, a communication system is provided. The system includes a first host configured to perform the method provided in the first aspect and a second host configured to perform the method provided in the second aspect.

### BRIEF DESCRIPTION OF DRAWINGS

FIG. 1 is a diagram of a structure of a computer device according to an embodiment of this application;
FIG. 2 is a diagram of a data center according to an embodiment of this application;
FIG. 3 is a diagram of a universal bus protocol packet format according to an embodiment of this application;
FIG. 4 is a diagram of supporting multi-path transmission in a universal bus protocol system according to an embodiment of this application;
FIG. 5 is a diagram of a PCIe architecture according to an embodiment of this application;
FIG. 6 is a schematic flowchart of a communication method according to this application;
FIG. 7 is a diagram of resource registration according to this application;
FIG. 8 is a diagram of determining a resource space order attribute according to this application;
FIG. 9 is a diagram of a data structure of an entry according to this application;
FIG. 10 is a diagram of a packet format according to this application;
FIG. 11 is a diagram of a structure of a communication apparatus 1100 according to an embodiment of this application;
FIG. 12 is a diagram of a structure of a chip system 1200 according to an embodiment of this application; and
FIG. 13 schematically shows a conceptual partial view of a computer program product according to an embodiment of this application.

### DESCRIPTION OF EMBODIMENTS

For ease of understanding of embodiments of this application, the following several points are described.

First, "at least one" shown in this application means one or more, and "a plurality of" means two or more. In addition, in embodiments of this application, "first", "second", and various numeric numbers (for example, "#1" and "#2") are merely used for distinguishing for ease of description, and are not used to limit the scope of embodiments of this application. Sequence numbers in the following processes do not mean an execution order. The execution order of the processes should be determined based on functions and internal logic of the processes, and should not constitute any limitation on implementation processes of embodiments of this application. It should be understood that, objects described in this way may be interchangeable in proper cases, so that solutions other than embodiments of this application can be described. In addition, in embodiments of this application, words such as "S610" are merely identifiers for ease of description, and do not limit an order of performing steps.

Second, in embodiments of this application, the terms such as "example" or "for example" are used to represent giving an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner.

Third, "store" in embodiments of this application may be storage in one or more memories. The one or more memories may be separately disposed, or may be integrated into an encoder, a decoder, a processor, or a communication apparatus. Alternatively, some of the one or more memories may be separately disposed, and some may be integrated into a decoder, a processor, or a communication apparatus. The memory may be a storage medium in any form. This is not limited in this application.

Fourth, in embodiments of this application, the term "include" (also referred to as "includes", "including", "comprises", and/or "comprising") used in this specification specifies presence of the stated features, integers, steps, operations, elements, and/or components, with presence or addition of one or more other features, integers, steps, operations, elements, components, and/or their combinations not excluded.

Fifth, "if" in embodiments of this application may be interpreted as a meaning of "when" ("when" or "upon"), "in response to determining", or "in response to detecting". Similarly, based on the context, a phrase "if determining" or "if detecting (a stated condition or event)" may be interpreted as a meaning of "when determining", "in response to determining", "when detecting (the stated condition or event)", or "in response to detecting (the stated condition or event)".

Sixth, in embodiments of this application, the terms used in the descriptions of the various examples are merely intended to describe specific examples and are not intended to impose a limitation. Terms "one" ("a" and "an") and "the" of singular forms used in the descriptions of the various examples and the appended claims are also intended to include plural forms, unless otherwise specified in the context clearly.

Seventh, the term "and/or" in this specification describes only an association relationship between associated objects and represents that three relationships may exist. For example, A and/or B may represent the following three cases: Only A exists, both A and B exist, and only B exists. In addition, the character "/" in this specification usually indicates an "or" relationship between associated objects.

The following describes technical solutions in embodiments of this application with reference to accompanying drawings.

In this application, a processor in a computer system accesses a configuration space of an external device. The computer system may be a server or a terminal. The terminal includes but is not limited to user systems such as a desktop computer, a notebook computer, and a smartphone. For ease of understanding, the following describes a structure of the computer system.

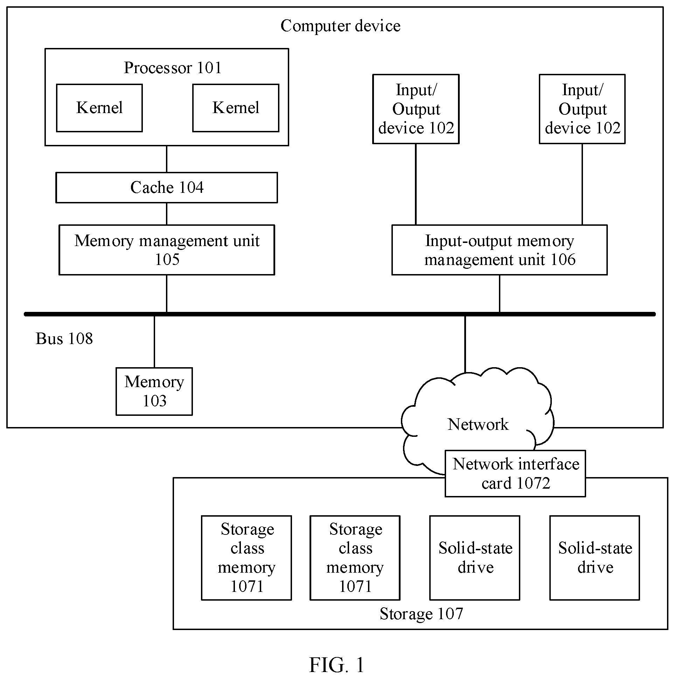

Refer to a diagram of a structure of a computer system shown in FIG. 1. The computer system includes a processor 101, an input/output device (input/output device, I/O device) 102, a memory 103, a cache 104, a memory management unit (memory management unit, MMU) 105, an input-output memory management unit (input-output memory management unit, IOMMU) 106, a storage 107, and a bus 108.

The processor 101 includes at least one core (core). The core is also referred to as a computing engine. Each core may independently execute a task. When the processor 101 includes a plurality of cores, tasks from an application may be classified, so that the application can make full use of the plurality of cores to execute more tasks within specific time. In this embodiment, the processor 101 may be a main processor, for example, a central processing unit (Central Processing Unit, CPU).

The input/output device 102 is a hardware device that has a data input capability and/or a data output capability. The input/output device 102 may be divided into an input device and an output device. The input device may include a device like a mouse, a keyboard, a joystick, a stylus, or a microphone, and the output device may include a device like a display or a speaker.

The memory 103 is also referred to as an internal memory or a main memory, and is configured to temporarily store operation data in the processor 101. Further, the memory 103 is further configured to temporarily store data exchanged with the storage 107. The memory 103 may be generally implemented by using a storage medium like a dynamic random access memory DRAM or a static random access memory (static random access memory, SRAM).

The cache 104 (in this embodiment, the cache is a processor cache, for example, a CPU cache) is a component configured to reduce average time required for the processor 101 to access the memory 103. Refer to FIG. 1. In a pyramid storage system, the cache 104 is located at a second layer from top to bottom, is only lower than a register (not shown in FIG. 1) of the processor 101, and is higher than the memory 103 (the memory 103 is located at a third layer from top to bottom). Generally, a capacity of the cache 104 is far less than that of the memory 103, but an access speed may be close to a frequency of the processor 101.

The memory management unit 105 is computer hardware configured to process a data access request. The memory management unit 105 is specifically configured to map a virtual address (virtual address, VA) in the data access request. The memory management unit 105 may intercept a data access request sent by the core of the processor 101, and map (or translate) a virtual address in the data access request to a physical address (physical address, PA), to access the memory 103 based on the physical address.

The input-output memory management unit 106 is essentially a memory management unit. Similar to that the memory management unit 105 maps a virtual address visible to the processor 101 to a physical address, the input-output memory management unit 106 is configured to map a virtual address (which may also be referred to as a device address or an I/O address) visible to the input/output device 102 to a physical address.

The storage 107 is also referred to as an external storage or a secondary memory, and is usually configured to persistently store data. For example, the storage 107 may persistently store the operation data in the processor 101. Even if power supply is abnormal, data that has been written into the storage 107 can still be stored. This avoids a data loss. During specific implementation, the storage 107 includes at least one non-volatile memory 1071. When the storage includes a plurality of non-volatile memories, the plurality of non-volatile memories may be of a same type, or may be of different types. For example, in an example of FIG. 1, the storage 107 may include two types of non-volatile memories, for example, a storage class memory (storage class memory, SCM) and a solid-state drive (solid-state drive, SSD).

The bus 108 is configured to connect functional components of the computer system. The bus 108 is a public communication backbone for transmitting information between the functional components of the computer system. The bus 108 may be a transmission wire bundle formed by wires. The bus 108 may be further classified into an internal bus and an external bus based on different connection objects.

The internal bus uses an internal bus protocol to transmit information. The internal bus protocol includes a bus protocol used to access a memory space of the computer system. The external bus uses an external bus protocol to transmit information. The external bus protocol includes a bus protocol used to access a storage space of the computer system. The memory space is an address space of the memory, and the storage space is an address space of the storage.

In some embodiments, the internal bus protocol includes but is not limited to a peripheral component interconnect (peripheral component interconnect, PCI) bus, a peripheral component interconnect express (PCI Express, PCIe) protocol, a QuickPath interconnect (Intel^{®} QuickPath Interconnect, QPI) protocol, and a universal bus (universal bus) protocol. The external bus protocol includes but is not limited to a small computer system interface (small computer system interface, SCSI) protocol or a serial attached small computer system interface (Serial Attached SCSI, SAS) protocol.

It should be noted that the computer system shown in FIG. 1 is described by using an example in which the storage 107 is a remote storage. As shown in FIG. 1, the storage 107 includes a network interface card 1072. The network interface card 1072 may be, for example, a smart network interface card NIC (that is, a network adapter card). The storage 107 accesses a network via the network interface card 1072, and is further connected to another component of the computer system over the network. The network may be a wired communication network, for example, an optical fiber communication network, or may be a wireless communication network, for example, a wireless local area network (wireless local area network, WLAN) or a fifth generation (fifth generation, 5G) mobile communication network.

In some possible implementations, the storage 107 of the computer system may alternatively be a local storage, and another component of the computer system, for example, the processor 101, may be connected to the local storage through the bus 108. In some other possible implementations, the computer system may include both a remote storage and a local storage. In addition, this embodiment of this application is applicable to a central storage scenario or a distributed storage scenario. This is not limited in this embodiment.

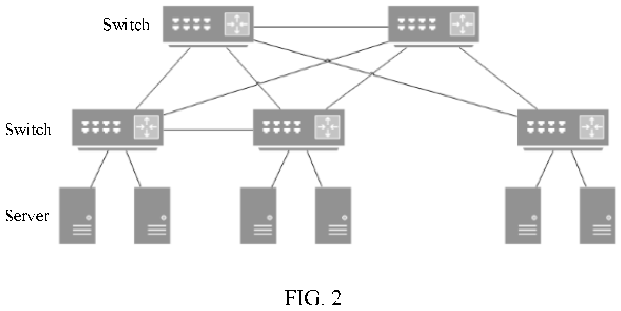

For example, a manner of accessing a configuration space register of a bus device provided in embodiments of this application may be further applied to a server cluster that can communicate across networks shown in FIG. 2, for example, a data center shown in FIG. 2. An internal structure of a switch or a server shown in FIG. 2 is shown in FIG. 1 above.

In addition, the internal bus protocol supported by the computer system in this application includes the universal bus protocol, and a transport layer connection may be established between computer systems. The universal bus protocol may also be referred to as a LingQu bus protocol or a unified bus protocol, and is a bus protocol standard. A name of the universal bus protocol is not limited in this application.

The universal bus protocol breaks existing protocol barriers and eliminates unnecessary conversion overheads, thereby achieving an ultra-low delay. The universal bus protocol defines an independent transaction (transaction, TA) layer and transport (transport, TP) layer. There is a connection between transport layers, but no connection between transaction layers. For a host (host), there is no connection between transaction layers between two hosts, and there is a connection between transport layers. In this case, all transactions of any one of the two hosts are carried on the transport layer for transmission. The universal bus protocol includes the transport layer and the transaction layer. The transport layer is responsible for retransmission of a lost packet in a network to ensure reliable transmission, and the transaction layer processes different transactions. The transport layer receives a packet from the network, strips a transport header, and forwards the packet to the transaction layer.

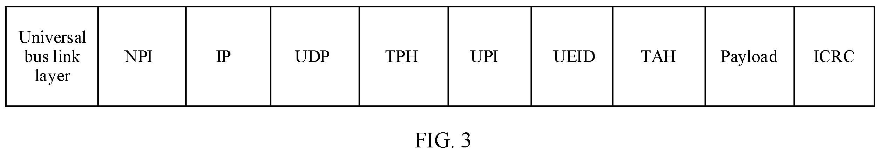

FIG. 3 shows a universal bus protocol packet format. Specifically, definitions of fields in the universal bus protocol packet format are shown in Table 1:

**Table 1**

| Name (name) | Description (description) |
|---|---|
| Unified bus link (unified bus LINK) layer | Link (LINK) layer defined in the universal bus protocol, where the unified bus link layer may alternatively be replaced with Ethernet MAC |
| Network partition ID (network partition ID, NPI) | Used for physical network isolation |
| IP | IP protocol header |
| User datagram protocol (user datagram protocol, UDP) | UDP protocol header, where a UDP destination port is 4792 indicates a universal bus packet, and the UDP is followed by a transport header (transport header, TPH) |
| TPH | Transport header, including a TP opcode (opcode), a source TPN, a destination TPN, a packet sequence number (packet sequence number), and the like |
| Unified bus partition ID (unified bus partition ID, UPI) | Used for tenant isolation |
| Unified bus entity ID (unified bus entity ID, UEID) or briefly referred to as EID | Including a source entity identifier (source entity ID) and a destination entity identifier (destination entity ID), where a bit width of the EID is 128 bits and is unique in the entire network, and one EID may represent one virtual machine, or may represent one SSD controller |
| Transaction header (transaction header, TAH) | Transaction header, including a TA opcode (opcode) (indicating a transaction operation type like send, read, write, atomic, or transaction layer acknowledgment), a destination JFR number, a transaction layer segment sequence number (segment sequence number, TASSN), a read/write address, a length, and the like |
| Payload (payload) | Payload part of a universal bus protocol packet |
| Invariable cyclic redundancy check (invariable Cyclic Redundancy Check, ICRC) code | Used to verify the universal bus protocol packet |

Specifically, an interaction interface between the transaction layer of the universal bus protocol and an application is referred to as Jetty. A message of the application may be sent to any destination through one Jetty, or a message from any source may be received through one Jetty. A Jetty that can be used for only sending is defined as (Jetty For Send, JFS), and a Jetty that can be used for only reception is defined as (Jetty For Receive, JFR).

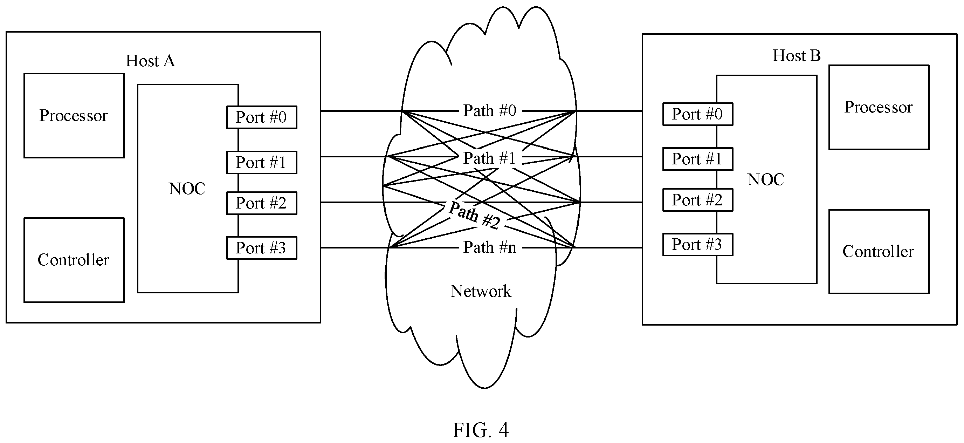

FIG. 4 is a diagram of supporting multi-path transmission in a universal bus protocol system according to an embodiment of this application.

As shown in FIG. 4, the universal bus protocol system in this application supports a plurality of paths, and includes a plurality of source ports (for example, a port #0 (port #0), a port #1, a port #2, and a port #3 in a host A shown in FIG. 4), a plurality of destination ports (for example, a port #0, a port #1, a port #2, and a port #3 in a host B shown in FIG. 4), and a plurality of network paths (for example, a path #1, a path #2, ..., and a path #n shown in FIG. 4). The host A may be understood as a source device, the host B may be understood as a destination device, and the host A may send a packet to the host B over the plurality of paths.

Optionally, the host A and/or the host B may further both include a processor (processing unit, PU) (for example, a central processing unit (central processing unit, CPU)), a controller (controller), a system-on-a-chip (system-on-a-chip, NOC), and the like. Hardware or a software system included in the host is not limited in this application. Refer to descriptions of the host in a current related technology. Details are not described in this application.

For example, in the universal bus protocol system shown in FIG. 4, the packet may be transmitted between the two devices through the plurality of source ports or the plurality of destination ports and the plurality of network paths, to increase communication bandwidth.

The foregoing briefly describes, with reference to FIG. 1 to FIG. 4, the scenario to which this application can be applied and the internal logical units of the host. For ease of understanding embodiments of this application, some basic concepts in this application are briefly described.
1. Packet ordering: Packet ordering is implemented by sending or receiving packets in a specific order. For example, in a current PCIe architecture, when a CPU accesses memories with different attributes of a peripheral via access packets (for example, store (store) and load (load) instructions), different ordering can be used to achieve packet ordering.

For example, memory attributes can be categorized into two types:
device (device) memory, including input/output (input/output, I/O) memory spaces of device registers; and
normal (normal) memory, including memory spaces such as a static random access memory (static random access memory, SRAM) or a dynamic random access memory (dynamic random access memory, DRAM).

When the device (device) memory space is accessed, packet ordering is typically implemented in an endpoint order (endpoint order) manner. When the normal (normal) memory is accessed, packet ordering is typically implemented in a request order (request order) manner. The endpoint order may implement an order of a plurality of packets to a same endpoint, and the request order may implement an order of a plurality of packets to a same address.

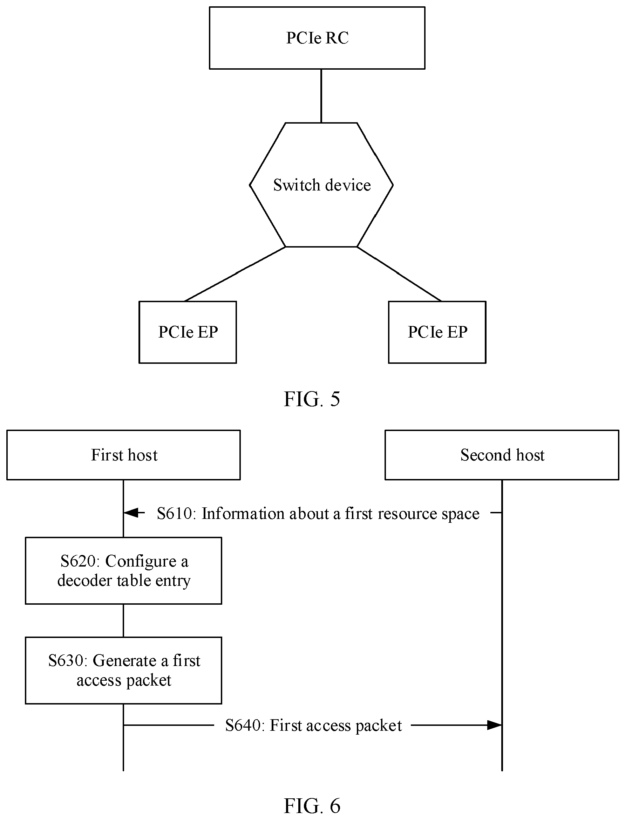

For ease of understanding, with reference to FIG. 5, how to implement packet ordering in communication between two devices in the current PCIe architecture is briefly described.

As shown in FIG. 5, PCIe networking is a tree structure, and includes a PCIe root complex (root complex, RC), a switch (switch) device, and a PCIe endpoint (endpoint, EP) shown in FIG. 5. The PCIe RC is responsible for managing communication between the CPU and another device, the switch device is configured to extend one PCIe interface into a plurality of PCIe interfaces, and the PCIe EP is a device without a data forwarding function.

It should be understood that FIG. 5 is merely an example, and does not constitute any limitation on the protection scope of this application. FIG. 5 is merely an example for describing how to implement packet ordering in a scenario in which different devices in the PCIe networking communicate with each other. For example, in the scenario shown in FIG. 5, the CPU delivers three store (store) requests, and there is no order relationship between the three store requests. However, after receiving the 1^{st} store request, the PCIe RC replies with a Comp response, to indicate that the current request has arrived and that a command execution order and a command receiving order need to be consistent. Therefore, the packets corresponding to the three requests need to be marked as SO, in other words, strong ordering execution is required.

In the current PCIe architecture, packet ordering has the following features:
(1) Only a single path (single path) is supported. In a current PCIe architecture ordering (ordering) mechanism, a point-to-point ordering mechanism is used to ensure an order on an entire packet transmission path, so as to achieve end-to-end ordering.
(2) Even if a PCIe EP side has a plurality of bar spaces for the PCIe RC to use, access to a memory-mapped input/output (memory-mapped I/O, MMIO) space still follows a same path, and complies with a same ordering mechanism.
(3) In a current PCIe system design, logic is strictly implemented based on SO. When a load/store instruction sent by an xPU is converted into a PCIe packet, "SO" is used for all order attributes by default.

2. Order packet: It can be learned from the foregoing that packet ordering is for a packet with an ordering requirement. In this application, the packet with the ordering requirement is referred to as an order packet, and a packet without an ordering requirement is referred to as a non-order packet. For example, the packet with the ordering requirement includes but is not limited to a packet sent depending on a receiving status of another packet. For example, a packet #1 can be sent only when a packet #2 is successfully received. In this case, the packet #1 is an order packet. Similarly, the packet without the ordering requirement includes but is not limited to a packet sent not depending on a receiving status of another packet.

3. Transport group (transport group, TPG): At least one TPG may be established at a transport layer between a source (initiator) device and a target (target) device, and each TPG includes a plurality of transport ports (transport port, TP). When the source device sends a packet to the target device, load balancing may be performed between the plurality of TPs in the TPG, and different packets may be transmitted over different network paths.

4. Resource registration: In a universal bus system, a memory segment (memory segment) and/or a functional entity (functional entity, FE) on the target device may be provided for the source device in a registration manner for use. The memory segment and/or the functional entity are/is a unit for the target device to divide a resource of the target device, and represent a device resource with specific isolation. For example, the memory segment is a segment of continuous virtual address (virtual address, VA) space, and each memory segment corresponds to one segment of physical memory. The target device creates and registers the memory segment, and the source device applies for using the memory segment of the target device.

For example, after obtaining information about the memory segment, the source device maps a unified bus address (unified bus address, UBA) of the memory segment to a local process VA space, to obtain a mapped address (mapped VA, mVA).

It should be understood that a resource registration procedure of the target device is not limited in this application. For example, resource application and registration may be completed between the source device and the target device according to an in-band exchange mechanism, or may be completed according to an out-of-band exchange mechanism.

The foregoing briefly describes, with reference to FIG. 2, the scenario to which a communication method provided in this application is applicable, and describes the basic concepts in this application. In addition, the packet ordering manner in the current PCIe system design is described in the basic concept. As described above, in the current PCIe system design, packet ordering supports only the single path, does not have a multi-path capability, and cannot provide larger interaction bandwidth. That is, the packet ordering manner is not applicable to the universal bus protocol system shown in FIG. 4, because the universal bus protocol system shown in FIG. 4 supports multi-path transmission.

In addition, it can be learned from the features of packet ordering in the PCIe system design shown above that when the load/store instruction accesses a network, ordering is performed based on "SO", and execution efficiency is low on a receive side. For flows that do not have an order relationship, because a same physical link is used, order association is introduced. Consequently, interaction efficiency is reduced.

This application provides a communication method, to implement packet ordering in multi-path transmission scenarios. The multi-path transmission scenario includes but is not limited to multi-path transmission supported by the universal bus protocol system shown in FIG. 4, or may be multi-path transmission supported by another system (for example, multi-path transmission that can be supported by a PCIe system).

It should be understood that the communication method provided in embodiments of this application may be applied to a computer system, for example, the cross-network communication system shown in FIG. 2.

It should be further understood that a specific structure of an execution body of the method provided in embodiments of this application is not particularly limited in the following embodiments, provided that a program that records code of the method provided in embodiments of this application can be run to implement the method provided in embodiments of this application. For example, the execution body of the method provided in embodiments of this application may be a device, or may be a functional module that is in the device and that can invoke the program and execute the program.

FIG. 6 is a schematic flowchart of a communication method according to this application. The method is applied to a scenario in which a first host communicates with a second host, for example, the scenario shown in FIG. 2.

In the embodiment shown in FIG. 6, the first host may serve as a transmit end (or referred to as a source device (initiator)), and the second host may serve as a receive end (or referred to as a target device (target)). For the receive end, the receive end is a local device, and the transmit end is a remote device. For the transmit end, the transmit end is a local device, and the receive end is a remote device.

For example, the first host may be a physical machine or a virtual machine. If the first host is a virtual machine, steps performed by the first host may be performed by the virtual machine. Similarly, the second host may be a physical machine or a virtual machine. If the second host is a virtual machine, steps performed by the second host may be performed by the virtual machine.

Specifically, the method shown in FIG. 6 includes the following steps.

S610: The first host obtains information about a first resource space in the second host.

In this embodiment, the first host is a transmit end that sends a packet. For example, the first host is a device that sends a load instruction and/or a store instruction. The second host is a receive end that receives the packet. For example, the second host is a device that receives the load instruction and/or the store instruction.

For example, in this embodiment, the first host may be understood as a device that uses a resource space, and the second host may be a device that provides the resource space for the first host to use. For example, the first host may be a user host (user host) in a universal bus system, and the second host may be a home device (home device) in the universal bus system. For another example, the first host and the second host may be home devices in a universal bus system, or the first host and the second host may be user hosts in a universal bus system. For another example, the first host and the second host may be other devices in a universal bus system. This is not limited in this embodiment. The second host may provide a resource of the second host for the first host to use. For example, the second host provides an FE resource or a memory fragment level resource for the first host to use, so that the first host can use a resource of another device in the universal bus system.

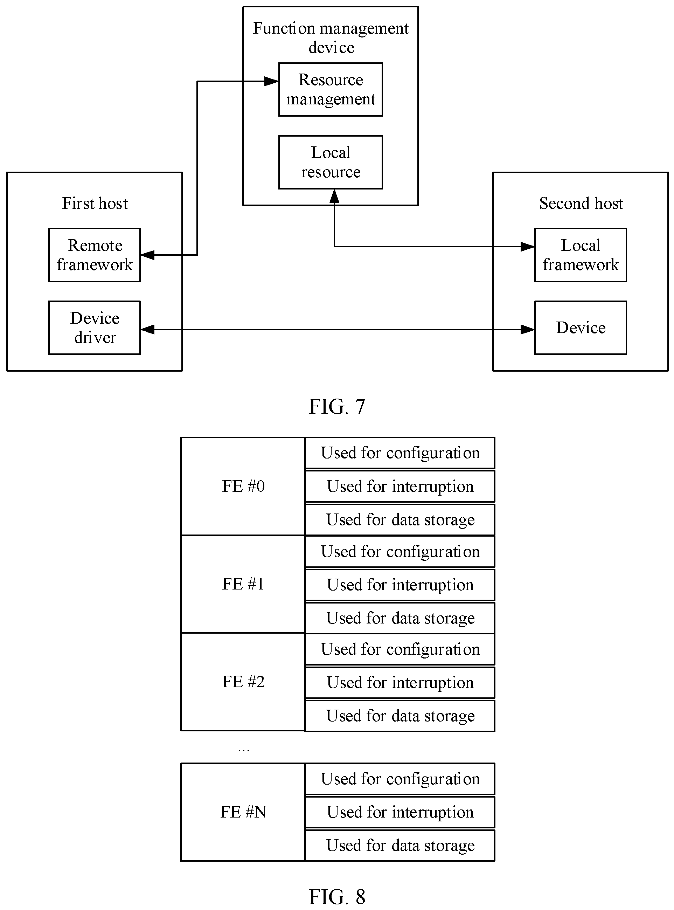

For ease of understanding, the following describes in detail, with reference to FIG. 7, how the second host provides the resource of the second host for the first host to use, and how the first host uses the resource of the second host in this embodiment.

It can be seen from FIG. 7 that the universal bus system includes the first host (that is, the user host), the second host (that is, the home device), and a function management (function management, FM) device. The first host is a device that uses the resource of the second host, the second host is a device that provides an available resource for the first host, and the FM device is a device that implements a management function in the system. For example, the FM device may obtain at least one home device in the system through scanning.

For example, after discovering the second host through scanning, the FM device manages the second host, and the FM device may register the resource (for example, the FE resource or a memory fragment) of the second host with the first host. The first host may create a driver (for example, a device driver of the first host shown in FIG. 7) that drives the second host, so that the first host can use the resource of the second host.

It should be understood that a manner in which the second host provides the resource of the second host for the first host to use shown in FIG. 7 is merely an example, and does not constitute any limitation on the protection scope of this application. The second host may register the resource of the second host with the first host in another manner, so that the first host can use the resource of the second host. This is not limited in this embodiment.

For example, in this embodiment, the first host may obtain information about the resource space in the second host based on communication address of the second host and description information of the second host that are specified by the FM device.

Specifically, the information about the first resource space includes a start address of the first resource space, length information of the first resource space, and order attribute information corresponding to the first resource space; and the order attribute information corresponding to the first resource space indicates an ordering requirement corresponding to a first access packet for accessing the first resource space.

It should be understood that the first host may obtain information about at least one resource space of the second host. The first resource space is any one of the at least one resource space, and the information about the first resource space includes the start address of the first resource space and a length of the first resource space. An ordering requirement corresponding to the first resource space is indicated by the order attribute information corresponding to the first resource space. The ordering requirement corresponding to the first resource space may be understood as the ordering requirement of the access packet for accessing the first resource space. For example, the first host may further obtain information about a second resource space in the second host. The information about the second resource space includes a start address of the second resource space, length information of the second resource space, and order attribute information corresponding to the second resource space; and the order attribute information corresponding to the second resource space indicates an ordering requirement corresponding to a second access packet for accessing the second resource space.

In a possible implementation, order attribute information corresponding to different resource spaces is provided by the second host. For example, the information that is about the at least one resource space and that is obtained by the first host includes order attribute information corresponding to the resource space.

In this implementation, the order attribute information corresponding to different resource spaces is determined by the second host. For example, the second host may determine, based on a function of a resource space, order attribute information corresponding to the resource space, and provide the corresponding order attribute information for the first host in a resource space registration procedure.

For ease of understanding, with reference to FIG. 8, how the second host determines the order attribute information of different resource spaces is described.

As shown in FIG. 8, the second host has a plurality of FE resources for use, and resource spaces corresponding to one or more FEs are used for different purposes during function design. For example, resource spaces corresponding to a part of FEs are used for configuration (configure), resource spaces corresponding to a part of FEs are used as interrupt information, resource spaces corresponding to a part of FEs are used as command queues (command queue) for delivering commands, resource spaces corresponding to a part of FEs are used as doorbells (doorbell) of command queues, and resource spaces corresponding to a part of FEs are used for data storage.

Resource spaces corresponding to different FEs may have different order attributes. For example, the resource space corresponding to the FE and used as the command queue for delivering the command or the resource space corresponding to the FE and used for data storage may be RO/NO. For another example, the resource space corresponding to the FE and used as the doorbell may be SO. There may be an ordering requirement or may have no ordering requirement between the resource spaces corresponding to different FEs. For example, there may have no ordering requirement between the resource spaces of different FEs.

In another possible implementation, the order attribute information corresponding to different resource spaces is determined by the first host.

In this implementation, when the second host provides the first host with different resource spaces for use by the first host, the second host does not provide order attribute information corresponding to the different resource spaces, and the first host may determine order attributes of the different resource spaces based on actual usages of the different resource spaces.

For example, the second host provides a resource space #1 and a resource space #2 for the first host, and the first host determines that the resource space #1 is used to store data and the resource space #2 is used to receive an interrupt instruction. In this case, the first host determines that order attribute information corresponding to the resource space #1 is information indicating that ordering is not required, and order attribute information corresponding to the resource space #2 is information indicating that strong ordering is required.

Further, in this embodiment, after obtaining the information about the resource space in the second host and determining the order attribute information corresponding to the different resource spaces, the first host may store the order attribute information corresponding to the resource spaces and path information corresponding to the resource spaces. For example, information about the different resource spaces is configured in a universal bus decoder (UB decoder) table entry of the first host, where the entry is used to determine a routing path of a packet. For another example, the order attribute information corresponding to the resource spaces and the path information corresponding to the resource spaces may be stored in a storage space, or may be recorded in another manner. This is not limited in this embodiment.

For ease of understanding, this embodiment is described by using an example in which the order attribute information corresponding to the resource space and the path information corresponding to the resource space are configured in the universal bus decoder (UB decoder) table entry. In this case, the method procedure shown in FIG. 6 further includes the following step.

S620: The first host configures the decoder table entry.

For ease of description, the following uses an example in which the first host configures the information about the first resource space in the decoder table entry for description. The first resource space may be any resource space in the at least one resource space provided by the second host. The first host configures the information about the first resource space in the decoder table entry. The decoder table entry includes a first entry, and the first entry includes path information (which may be briefly referred to as first path information) corresponding to the first access packet for accessing the first resource space and the order attribute information corresponding to the first resource space.

For example, the first host obtains information about a plurality of resource spaces in the second host, where order attributes respectively corresponding to the plurality of resource spaces may be different.

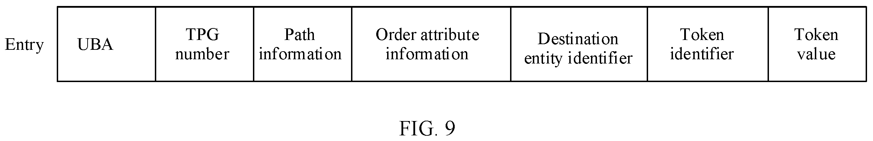

In this embodiment, the first resource space corresponds to the first entry in the table entry. A data structure of an entry (entry) in the table entry is shown in FIG. 9, and includes a UBA, a transport group number (transport group number, TPG Number), path information that is also referred to as an order identifier (order ID), order attribute information that is referred to as an order type (order type), a destination entity identifier (destination entity ID, DstEID), a token identifier (TokenID), and a token value (TokenValue).

For example, meanings of the fields in the entry are shown in Table 2:

**Table 2**

| Name (Name) | Bit width (bit) Width (bit) | Description (Description) |
|---|---|---|
| UBA | xx bit | An internal physical address is translated into a UBA [63:12] on a UB line, and lower 12 bits are the same as those of the input address |
| TPG Number | xx bit | This field indicates a TPG number corresponding to the segment address |
| Order ID | xx bit | Indicates an order ID of a flow for currently accessing an address space, where |
| | | it is recommended that the order ID field be used to select a unique egress port from a plurality of source egress ports that are path-reachable to a destination device, the order ID field be filled in a packet as an LB field, and a hash routing mechanism be enabled, to ensure that a load/store instruction arrives at a receive side over a unique path in an entire network |
| Order Type | xx bit | Indicates an order type of the flow for currently accessing the address space, for example, NO/RO/SO, where this field is directly filled in the packet as a controller |
| DstEID | xx bit | Indicates an EID of a communication destination object |
| TokenID | xx bit | Indicates an index of a communication memory |
| TokenValue | xx bit | TokenValue: permission verification value |

The flow for currently accessing the address space in Table 2 includes at least one packet in the currently accessed address space, that is, one or more access packets for accessing a same address space are referred to as "flows for accessing the address space".

It should be understood that a decoder is mainly used to support the first host in querying the UBA of the packet and partial field translation information of the packet based on a physical address (hard physical address, HPA) of the packet.

For example, the first host queries the decoder to obtain the following information:
TPG, indicating a TPG for transmitting a current packet, where a plurality of path-reachable transmit ports/paths between a source end and a destination end are maintained in the TPG;
Order ID, indicating the order ID of the flow for currently accessing the address space, where the order ID is used to select a unique egress port/path from the plurality of path-reachable transmit ports/paths in the TPG, and is filled in the packet as a load balancing (load balancing, LB) field, and the hash routing mechanism may be enabled, to ensure that the packet arrives at the receive side over the unique path; and
Order Type, indicating the order type of the flow for currently accessing the address space, for example, NO, RO, or SO, where this field is directly filled in an "ODR" field in the packet as the controller.

It should be understood that the first host may obtain the information about the at least one resource space in the second host, and configure the information about the at least one resource space to the universal bus decoder of the first host. The first resource space is any one of the at least one resource space. For example, for the information that is about the second resource space in the second host and that is obtained by the first host, the first host configures the information about the second resource space in the decoder table entry. The decoder table entry includes a second entry, and the second entry includes path information corresponding to the second access packet for accessing the second resource space and order attribute information corresponding to the second resource space.

By way of example rather than limitation, the path information corresponding to the second access packet (which may be briefly referred to as second path information) is different from the path information corresponding to the first access packet, and the order attribute information corresponding to the second resource space is different from the order attribute information corresponding to the first resource space. That is, in this embodiment, access packets with different ordering requirements may be transmitted over different paths, to ensure that packet ordering transmission is implemented in the multi-path transmission scenario.

After the foregoing table entry configuration is completed, if the first host initiates access to the second host to access the first resource space provided by the second host for the first host, the first host may obtain, by querying the decoder table entry, an ordering requirement that the first access packet needs to meet, and generate the first access packet based on information (such as the order attribute information and the transmission path information) obtained by querying the decoder table entry. In this case, the method procedure shown in FIG. 6 further includes the following step.

S630: The first host generates the first access packet.

Specifically, when generating the first access packet, the first host fills, based on the order attribute information obtained through querying, fields related to sending of a data packet, and selects a sending path.

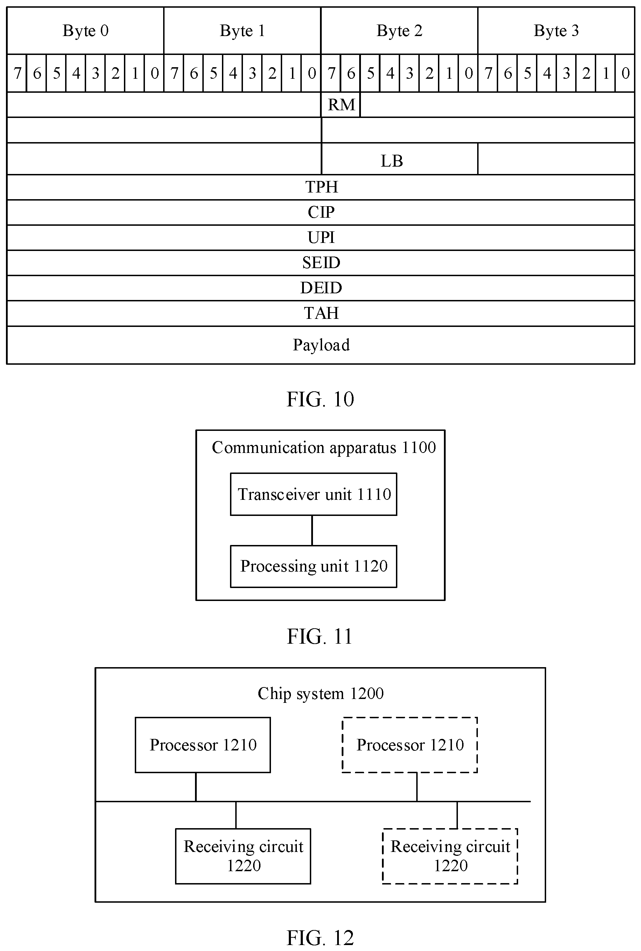

For example, a format of the first access packet is shown in FIG. 10, and includes but is not limited to a routing mode (routing mode) field and an LB field. Meanings of the RM field and the LB field are shown in Table 3:

**Table 3**

| | |
|---|---|
| RM | Routing mode indication field in a packet |
| LB | Load balancing factor in the packet, which may participate in hash calculation during multi-path routing load balancing |

It should be noted that the first access packet further includes other information, and this embodiment mainly relates to the RM field and the LB field in the packet. For another field, refer to related descriptions of a packet format in a current universal bus protocol. Details are not described herein again.

Specifically, a definition of the RM field in a packet header may be shown in Table 4:

**Table 4**

| **Field in a packet header** | **Explanation** |
|---|---|
| RM (2 bits) | Bit 0: indicates flow-based hashing when being 0, or indicates adaptive routing when being 1 |
| | Bit 1: indicates that path selection is performed in all paths configured in a routing table when being 0, or indicates that a subset of shortest paths is selected in paths configured in a routing table to perform path selection when being 1 |

Optionally, if the RM field indicates that a current transmission path selection manner of the first access packet is the flow-based hashing manner, the first host and an intermediate switch (switch) may perform hash-based path selection based on a tuple. For example, during flow-based hashing, the first host and the intermediate switch may select one or more fields in the packet header to perform hash-based path selection, for example, a 5-tuple {srcIP, dstIP, protocol, transport layer source port, transport layer destination port} of an IP packet format. For a compressed packet format, {srcCNA, dstCNA, LB} may be used to perform hash-based path selection. For hash-based path selection, parameter information of the packet on a network device (for example, an ingress port number of the switch) may alternatively be selected for hash calculation.

Further, a TAH of the first access packet further includes an ODR field. A definition of the ODR field may be shown in Table 5:

**Table 5**

| Name (Name) | Bit width (bit) Width (bit) | Description (Description) |
|---|---|---|
| ODR | 3 | Used to request an order attribute identifier in a packet |
| | | ODR[1:0]: indicates an order attribute of the packet, where |
| | | 2'b00: NO, indicates that there is no any ordering requirement between a current packet and another packet; |
| | | 2'b01: RO, indicates a packet that has an ordering requirement with a subsequent SO packet, where the subsequent SO packet cannot be executed before the RO packet; |
| | | 2'b10: SO, indicates a packet with an ordering requirement, and indicates that there is an ordering requirement between the packet and a previous RO packet; and |
| | | 2'b11: reserved |
| | | ODR[2]: completion order (completion order), indicating that there is a completion order between the current packet and a previous packet, which is |
| | | used by the receive side, where |
| | | 1'b0: NO, indicates that there is no ordering requirement between the current packet and the previous packet; and |
| | | 1'b1: indicates that the current packet has a completion order requirement |

For example, after generating the first access packet, the first host may send the first access packet to the second host via a multi-path network (for example, the network shown in FIG. 4). In this case, the method procedure shown in FIG. 6 further includes the following step.

S640: The first host sends the first access packet to the second host.

Specifically, the switch determines, based on the RM field in the first access packet, a path that is in a plurality of paths and that is used to transmit the first access packet. Further, after receiving the first access packet, the second host may determine the ordering requirement of the first access packet based on the "ODR" field in the first access packet.

In the communication method in FIG. 6, in a resource registration phase, it is identified that there is no ordering requirement between packets for accessing a part of resource spaces, and the packets may be executed out of order, or it is identified that there is an ordering requirement between packets for accessing a part of resource spaces, in other words, an ordering requirement between packets for accessing different resource spaces may be learned in advance. Further, related information is configured in the decoder table entry. When an access request is sent, a corresponding order attribute may be obtained by querying the related information in the decoder table entry, and a related field of a packet is filled based on the order attribute. In a scenario in which ordering is completed, a plurality of paths can still be used.

For ease of understanding, the following describes, with reference to a specific example, how to implement packet ordering transmission in a multi-path scenario in the communication method shown in FIG. 6.

### Example 1:

Step 1: A load/store request delivered by an xPU of the first host arrives at a universal bus controller (universal bus controller) of the first host through an internal bus.

Step 2: The universal bus controller determines that the load/store request needs to be sent to the second host over a universal bus link.

Step 3: The universal bus controller initiates a table lookup request to the decoder table entry.

Step 4: Perform an internal table lookup based on an HPA to obtain corresponding information, where the information includes information provided when the second host registers the resource space, for example, the UBA, the Order ID, and the Order Type.

Step 5: After obtaining destination communication object information by querying the decoder table entry, the universal bus controller queries an internal routing table to obtain a plurality of path-reachable "egress ports/paths". The universal bus controller uses the "Order ID" as a path selection input of the plurality of path-reachable "egress ports/paths", and routes packets with a same "Order ID" to a same "egress port/path".

Step 6: The universal bus controller performs packet assembly, fills the "order type" field obtained by querying the decoder table entry into the "ODR" field of the packet, fills the "Order ID" field into the "LB" field of the packet, sets the bit 0 of the "RM" field in the packet to 0, and fills other information (such as the UBA, the DstEID, the TokenID, ...) into a corresponding position of the packet.

Step 7: When the packet is transmitted to the switch, the switch detects that "the bit 0 of the RM field is set to 0" in the packet, and uses the hash routing mechanism. For the compressed packet format, {srcCNA, dstCNA, LB} may be used to perform hash-based path selection. Therefore, same {srcCNA, dstCNA, LB} may reach the second host through a determined path.

Step 8: For the second host, packets that correspond to load/store operations with a same Order ID and that are sent by a same source device are received from a same physical port, and the second host performs order processing based on "ODR" fields in the packets.

It should be understood that the specific examples shown in FIG. 5 to FIG. 10 in embodiments of this application are merely intended to help a person skilled in the art better understand embodiments of this application, but are not intended to limit the scope of embodiments of this application. It should be further understood that sequence numbers of the foregoing processes do not mean an execution order of the processes. The execution order of the processes should be determined based on functions and internal logic of the processes, and should not constitute any limitation on implementation processes of embodiments of this application.

It should be further understood that, in embodiments of this application, unless otherwise stated or there is a logic conflict, terms and/or descriptions in different embodiments are consistent and may be mutually referenced, and technical features in different embodiments may be combined based on an internal logic relationship thereof, to form a new embodiment.

The foregoing mainly describes the solutions provided in embodiments of this application from the perspective of the methods. To implement the foregoing functions, corresponding hardware structures and/or software modules for performing the functions are included. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

The following describes in detail communication apparatuses provided in embodiments of this application with reference to FIG. 11 to FIG. 13. It should be understood that descriptions of apparatus embodiments correspond to the descriptions of the method embodiments. Therefore, for content that is not described in detail, refer to the foregoing method embodiments. For brevity, some content is not described again.

In embodiments of this application, the first host or the second host may be divided into functional modules based on the foregoing method examples. For example, functional modules may be obtained through division based on corresponding functions, or two or more functions may be integrated into one processing module. The integrated module may be implemented in a form of hardware, or may be implemented in a form of a software functional module. It should be noted that, in embodiments of this application, division into modules is an example, and is merely logical function division. In actual implementation, another division manner may be used. An example in which functional modules are obtained through division based on corresponding functions is used below for description.

FIG. 11 is a diagram of a structure of a communication apparatus 1100 according to an embodiment of this application.

In an example, the communication apparatus 1100 may be used in a first host, and the communication apparatus 1000 may be configured to perform the foregoing communication method, for example, configured to perform the method shown in FIG. 6. Specifically, the communication apparatus 1100 may include a transceiver unit 1110 and a processing unit 1120.

The transceiver unit 1110 is configured to obtain information about a first resource space in a second host, where the information about the first resource space includes a start address of the first resource space, length information of the first resource space, and order attribute information corresponding to the first resource space, and the order attribute information corresponding to the first resource space indicates an ordering requirement corresponding to a first access packet for accessing the first resource space. The processing unit 1120 is configured to configure the information about the first resource space in a decoder table entry, where the decoder table entry includes a first entry, the first entry includes path information corresponding to the first access packet for accessing the first resource space and the order attribute information corresponding to the first resource space, and a plurality of transmission paths are included between the first host and the second host.

For example, with reference to FIG. 6, the transceiver unit 1110 may be configured to perform S610 and S640, and the processing unit 1120 may be configured to perform S620 and S630.

It should be noted that the apparatus in FIG. 11 may also be configured to perform method steps in variations of embodiments shown in the foregoing accompanying drawings. Details are not described herein again.

In another example, the communication apparatus 1100 may be used in a second host, and the communication apparatus 1100 may be configured to perform the foregoing communication method, for example, configured to perform the method shown in FIG. 6.

The transceiver unit 1110 is configured to receive, for the second host, a first access packet from a first host, where the first access packet is used to access a first resource space in the second host, an order field of the first access packet carries information indicating an ordering requirement corresponding to the first access packet, and a load balancing factor field of the access packet carries information indicating a first transmission path. The processing unit 1120 is configured to determine the ordering requirement of the first access packet based on the order field of the first access packet, where a physical port for receiving at least one access packet transmitted on the first transmission path is the same, and the first access packet is one of the at least one access packet.

For example, with reference to FIG. 6, the transceiver unit 1110 may be configured to perform S610 and S640.

It should be noted that the apparatus in FIG. 11 may also be configured to perform method steps in variations of embodiments shown in the foregoing accompanying drawings. Details are not described herein again.

An embodiment of this application further provides a chip system 1200. As shown in FIG. 12, the chip system 1200 includes at least one processor and at least one interface circuit. For example, when the chip system 1200 includes one processor and one interface circuit, the processor may be a processor 1210 shown in a solid-line box (or a processor 1210 shown in a dashed-line box) in FIG. 12, and the interface circuit may be an interface circuit 1220 shown in a solid-line box (or an interface circuit 1220 shown in a dashed-line box) in FIG. 12.

When the chip system 1200 includes two processors and two interface circuits, the two processors include a processor 1210 shown in a solid-line box and a processor 1210 shown in a dashed-line box in FIG. 12, and the two interface circuits include an interface circuit 1220 shown in a solid-line box and an interface circuit 1220 shown in a dashed-line box in FIG. 12. This is not limited. The processor 1210 and the interface circuit 1220 may be interconnected through a line. For example, the interface circuit 1220 may be configured to receive a signal (for example, instructions stored in a memory). For another example, the interface circuit 1220 may be configured to send a signal to another apparatus (for example, the processor 1210).

For example, the interface circuit 1220 may read the instructions stored in the memory, and send the instructions to the processor 1210. When the instructions are executed by the processor 1210, a communication apparatus is caused to perform the steps in the foregoing embodiments. Certainly, the chip system 1200 may further include another discrete component. This is not specifically limited in embodiments of this application.

Another embodiment of this application further provides a computer-readable storage medium. The computer-readable storage medium stores instructions. When the instructions are run on a communication apparatus, the communication apparatus performs the steps performed by the communication apparatus in the method procedures shown in the foregoing method embodiments. In some embodiments, the disclosed methods may be implemented as computer program instructions encoded in a machine-readable format on the computer-readable storage medium or encoded on another non-transitory medium or product.

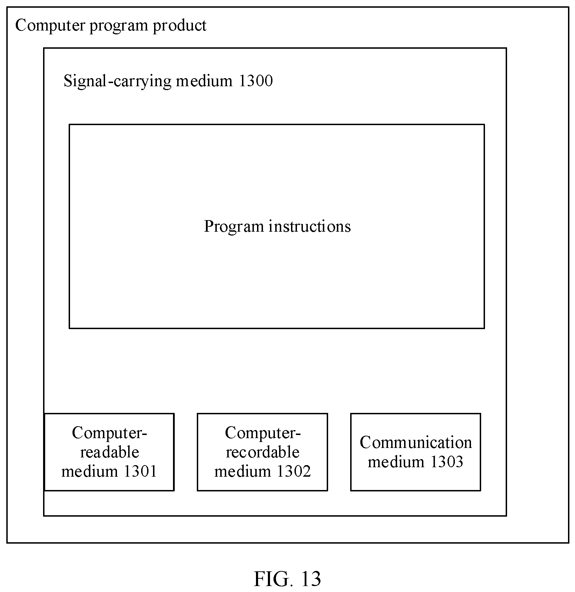

FIG. 13 schematically shows a conceptual partial view of a computer program product according to an embodiment of this application. The computer program product includes a computer program for executing a computer process on a computer device.

In an embodiment, the computer program product is provided by using a signal-carrying medium 1300. The signal-carrying medium 1300 may include one or more program instructions, and when the program instructions are run by one or more processors, the functions or some of the functions described above in FIG. 6 may be provided. Therefore, for example, one or more features described with reference to steps S610 to S640 in FIG. 6 may be carried by one or more instructions associated with the signal-carrying medium 1300. In addition, the program instructions in FIG. 13 are also described as example instructions.

In some examples, the signal-carrying medium 1300 may include a computer-readable medium 1301, for example, but not limited to, a hard disk drive, a compact disc (CD), a digital video disc (DVD), a digital tape, a memory, a read-only memory (read-only memory, ROM), or a random access memory (random access memory, RAM).

In some implementations, the signal-carrying medium 1300 may include a computer-recordable medium 1302, for example but not limited to, a memory, a read/write (R/W) CD, or an R/W DVD.

In some implementations, the signal-carrying medium 1300 may include a communication medium 1303, for example but not limited to, a digital and/or analog communication medium (for example, an optical fiber, a waveguide, a wired communication link, or a wireless communication link). The signal-carrying medium 1300 may be transmitted by a wireless communication medium 1303. The one or more program instructions may be, for example, computer-executable instructions or logic implementation instructions.

In some examples, various operations, functions, or actions are provided in response to one or more program instructions in the computer-readable medium 1301, the computer-recordable medium 1302, and/or the communication medium 1303.

It should be understood that the arrangement described herein is merely used as an example. Therefore, a person skilled in the art should understand that other arrangements and other elements (for example, machines, interfaces, functions, orders, and function groups) can be used instead, and some elements may be omitted together based on a desired result. In addition, a plurality of the described elements are functional entities that can be implemented as discrete or distributed components, or implemented in any appropriate combination at any appropriate location in combination with another component.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, for example, a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
obtaining, by a first host, information about a first resource space in a second host, wherein the information about the first resource space comprises a start address of the first resource space, length information of the first resource space, and order attribute information corresponding to the first resource space; and the order attribute information corresponding to the first resource space indicates an ordering requirement corresponding to a first access packet for accessing the first resource space; and
storing, by the first host, the order attribute information corresponding to the first resource space and first path information, wherein the first path information indicates a transmission path corresponding to the first access packet for accessing the first resource space; and
the transmission path indicated by the first path information is one of a plurality of transmission paths comprised between the first host and the second host.

2. The method according to claim 1, wherein storing, by the first host, the order attribute information and the first path information that correspond to the first resource space comprises:
configuring, by the first host, the information about the first resource space in a decoder table entry, wherein the decoder table entry comprises a first entry, and the first entry comprises the first path information and the order attribute information corresponding to the first resource space.

3. The method according to claim 2, wherein when the first host determines to send the first access packet to the second host to access the first resource space, the method comprises:
querying, by the first host, the decoder table entry to determine the first path information and the ordering requirement corresponding to the first access packet; and
determining, by the first host based on the first path information, an output port corresponding to the first access packet and a first transmission path, wherein
the first transmission path is a transmission path that is in the plurality of transmission paths and that is used to transmit the first access packet, and the first transmission path is used to transmit access packets corresponding to same path information.

4. The method according to claim 3, wherein the method further comprises:
generating, by the first host, the first access packet based on the first transmission path and the ordering requirement corresponding to the first access packet, wherein
an order field of the first access packet carries information indicating the ordering requirement corresponding to the first access packet, and a load balancing factor field of the first access packet carries information indicating the first transmission path.

5. The method according to claim 4, wherein a route indication field of the first access packet is set to 0; and the route indication field being set to 0 indicates to determine the transmission path of the first access packet according to a hash routing mechanism.

6. The method according to any one of claims 1 to 5, wherein obtaining, by the first host, the order attribute information corresponding to the first resource space comprises:
receiving, by the first host, the order attribute information corresponding to the first resource space from the second host; or
determining, by the first host based on usage of the first resource space, the order attribute information corresponding to the resource space.

7. The method according to any one of claims 1 to 6, wherein the method further comprises:
obtaining, by the first host, information about a second resource space in the second host, wherein the information about the second resource space comprises a start address of the second resource space, length information of the second resource space, and order attribute information corresponding to the second resource space; and the order attribute information corresponding to the second resource space indicates an ordering requirement corresponding to a second access packet for accessing the second resource space; and
storing, by the first host, order attribute information corresponding to the second resource space and second path information, wherein the second path information indicates a transmission path corresponding to the second access packet for accessing the second resource space; and
the second path information is different from the first path information, and the order attribute information corresponding to the second resource space is different from the order attribute information corresponding to the first resource space.

8. The method according to claim 7, wherein storing, by the first host, the order attribute information corresponding to the second resource space and the second path information comprises:
configuring, by the first host, the information about the second resource space in the decoder table entry, wherein the decoder table entry comprises a second entry, and the second entry comprises the second path information and the order attribute information corresponding to the second resource space.

9. The method according to any one of claims 1 to 8, wherein the ordering requirement corresponding to the first access packet comprises any one of the following:
strong ordering SO, no ordering NO, or relaxed ordering RO.

10. A communication method, wherein the method comprises:
receiving, by a second host, a first access packet from a first host, wherein the first access packet is used to access a first resource space in the second host, an order field of the first access packet carries information indicating an ordering requirement corresponding to the first access packet, and a load balancing factor field of the access packet carries information indicating a first transmission path; and
determining, by the second host, the ordering requirement of the first access packet based on the order field of the first access packet, wherein
the second host receives at least one access packet transmitted over the first transmission path via a same physical port, and the first access packet is one of the at least one access packet.

11. A communication method, comprising:
obtaining, by a first host, information about a first resource space in a second host, wherein the information about the first resource space comprises a start address of the first resource space, length information of the first resource space, and order attribute information corresponding to the first resource space; and the order attribute information corresponding to the first resource space indicates an ordering requirement corresponding to a first access packet for accessing the first resource space;
storing, by the first host, the order attribute information corresponding to the first resource space and first path information, wherein the first path information indicates a transmission path corresponding to the first access packet for accessing the first resource space;
receiving, by the second host, the first access packet from the first host, wherein the first access packet is used to access the first resource space in the second host, an order field of the first access packet carries information indicating the ordering requirement corresponding to the first access packet, and a load balancing factor field of the access packet carries information indicating a first transmission path; and
determining, by the second host, the ordering requirement of the first access packet based on the order field of the first access packet, wherein
the second host receives at least one access packet transmitted over the first transmission path via a same physical port, and the first access packet is one of the at least one access packet.

12. A communication system, comprising a first host and at least one second host, wherein
the first host is configured to obtain information about a first resource space in the second host, wherein the information about the first resource space comprises a start address of the first resource space, length information of the first resource space, and order attribute information corresponding to the first resource space; and the order attribute information corresponding to the first resource space indicates an ordering requirement corresponding to a first access packet for accessing the first resource space;
the first host is configured to store the order attribute information corresponding to the first resource space and first path information, wherein the first path information indicates a transmission path corresponding to the first access packet for accessing the first resource space;
the second host is configured to: receive the first access packet from the first host, wherein the first access packet is used to access the first resource space in the second host, an order field of the first access packet carries information indicating the ordering requirement corresponding to the first access packet, and a load balancing factor field of the access packet carries information indicating a first transmission path; and
the second host determines the ordering requirement of the first access packet based on the order field of the first access packet, wherein
the second host receives at least one access packet transmitted over the first transmission path via a same physical port, and the first access packet is one of the at least one access packet.

13. A communication apparatus, comprising a processor configured to read instructions stored in a memory, wherein when the processor executes the instructions, the communication apparatus is caused to implement the method according to any one of claims 1 to 10 or the communication apparatus is caused to implement the method according to claim 11.

14. A computer program product, wherein the computer program product comprises computer program code; and when the computer program code is run on a computer, the method according to any one of claims 1 to 10 is performed; or when the computer program code is run on a computer, the method according to claim 11 is performed.

15. A computer-readable storage medium, comprising a computer program, wherein when the computer program is run on a computer system, a processing module in the computer system is caused to perform the method according to any one of claims 1 to 10; or when the computer program is run on a computer system, a processing module in the computer system is caused to perform the method according to claim 11.
